# EUROPÄISCHE PATENTSCHRIFT

(11) **EP 1 437 490 B1**
(45) Veröffentlichungstag und Bekanntmachung des Hinweises auf die Patenterteilung: **02.02.2011**
(21) Anmeldenummer: 03024245.7
(22) Anmeldetag: 22.10.2003
(51) Int. Cl.: F01N 3/28

(54) **Abgasbehandlungseinrichtung**
Exhaust treatment device
Dispositif de traitement de gaz d'échappement

(30) Priorität: 11.01.2003 DE 10300780
(43) Veröffentlichungstag der Anmeldung: 14.07.2004
(73) Patentinhaber: J. Eberspächer GmbH & Co. KG, 73730 Esslingen (DE)
(72) Erfinder: Balle, Andreas, 73733 Esslingen (DE); Wirth, Georg, 73230 Kirchheim/Teck (DE); Scherer, Bernd-Peter, 73274 Notzingen (DE)
(74) Vertreter: BRP Renaud & Partner

(56) Entgegenhaltungen:
- EP-A- 0 467 247
- EP-A- 1 036 920
- US-A- 4 353 873
- US-A- 4 448 754
- US-A- 4 495 153

## Beschreibung

Die vorliegende Erfindung betrifft eine Abgasbehandlungseinrichtung, insbesondere für eine Brennkraftmaschine, vorzugsweise in einem Kraftfahrzeug.

Abgasbehandlungseinrichtungen, wie z.B. ein Katalysator oder ein Partikelfilter, insbesondere ein Rußfilter, besitzen üblicherweise ein Gehäuse, in dem ein geeigneter Substratkörper angeordnet ist. Üblicherweise besteht der Substratkörper aus einem Keramikwerkstoff, während das Gehäuse aus Metallblech hergestellt ist. Unterschiedliche Wärmeausdehnungskoeffizienten führen im Betrieb der Abgasbehandlungseinrichtung zu stark unterschiedlichem Wärmedehnungsverhalten bei Gehäuse und Substratkörper. Dementsprechend kann der Substratkörper nicht direkt am Gehäuse befestigt werden, sondern muss über entsprechende Lagerungen im Gehäuse festgehalten werden. Üblich ist dabei eine Radiallagerung, bei der eine Lagermatte aus einem geeigneten Lagermaterial den Substratkörper radial außen umhüllt und radial am Gehäuse abstützt. Durch eine entsprechend dimensionierte radiale Verpressung dieser Lagermatte beim Einbau ergibt sich dadurch auch eine axiale Fixierung und Abstützung des Substratkörpers am Gehäuse über die Lagermatte, also über die Radiallagerung. Eine derartige Bauweise hat sich zumindest für Katalysatoren bewährt.

Bei Partikelfiltern, insbesondere bei Rußfiltern, ist ein bei der Durchströmung des Substratkörpers auftretender Druckabfall deutlich größer als bei einem Substratkörper eines herkömmlichen Katalysators. Dementsprechend sind die am Substratkörper eines Partikefilters wirksamen axialen Kräfte (Druckdifferenz an den axialen Stirnseiten, Reibungskräfte der Gasströmung) deutliche größer als bei einem herkömmlichen Katalysator.

Aus der EP 1 036 920 A ist eine Abgasbehandlungseinrichtung bekannt.

Die vorliegende Erfindung beschäftigt sich mit dem Problem, für eine Abgasbehandlungseinrichtung der eingangs genannten Art eine verbesserte Ausführungsform anzugeben, bei der insbesondere die axiale Abstützung des Substratkörpers im Gehäuse verbessert ist.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Substratkörper wenigstens an einem axialen Ende am Außenrand seiner axialen Stirnseiten mit einem Lagerring aus einem geeigneten Lagermaterial axial abzustützen, wobei der Lagerring seinerseits in einen rinnenförmigen Stützring einsetzt und über diesen am Gehäuse abgestützt ist. Die auftretenden Axialkräfte können somit vom Substratkörper auf den Lagerring und von diesem über den Stützring an das Gehäuse übertragen werden. Somit erfolgt keine direkte, also starre Abstützung des Substratkörpers am Gehäuse, sondern eine indirekte, also elastische oder zumindest nachgiebige Abstützung über den Lagerring. Die Gefahr von Beschädigungen des Substratkörpers kann somit auch bei relativ großen Axialkräften reduziert werden. Die vorgeschlagene Axiallagerung eignet sich daher in besonderer Weise für die axiale Abstützung eines Substratkörpers in einem Partikelfilter, insbesondere in einem Rußfilter.

Bei einer entsprechenden Dimensionierung des Lagerrings, der in radialer Richtung ein vergleichsweise dünnes Profil besitzen kann, wird zum einen nur vergleichsweise wenig Lagermaterial zur Herstellung des Lagerrings benötigt. Insbesondere dann, wenn der Lagerring als Drahtgestrick ausgebildet ist, kann sich die erzielbare Materialeinsparung vorteilhaft auf die Herstellungskosten auswirken. Zum anderen beeinträchtigt der Lagerring durch die in radialer Richtung dünne Bauweise nur in einem vergleichsweise kleinen Querschnitt die axiale Durchströmbarkeit des Substratkörpers. Dies verbessert die Effektivität der Abgasbehandlungseinrichtung und reduziert gleichzeitig den bei der Durchströmung entstehenden Druckabfall.

Vorteilhafter Weise kann der Stützring als separates Bauteil ausgebildet werden, das bei der Herstellung der Abgasbehandlungseinrichtung am Gehäuse befestigt wird. Hierdurch ist es möglich, beim Anbringen des Stützrings Lagetoleranzen auszugleichen, um so eine möglichst gleichmäßige axiale Abstützung entlang des Lagerrings zu erzielen.

Erfindungsgemäß weist der Stützring einen Spalt auf, d.h. der Stützring besitzt in Umfangsrichtung eine Unterbrechung. Diese Bauweise ermöglicht es, bei der Montage des Stützrings Formtoleranzen des Gehäuseabschnitts, an dem der Stützring befestigt wird, auszugleichen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

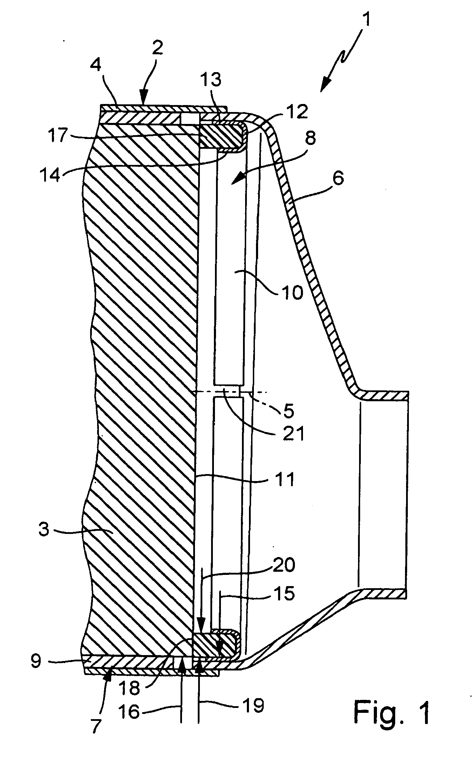

Die einzige Fig. 1 zeigt einen Längsschnitt durch eine Abgasbehandlungseinrichtung im Bereich einer Axiallagerung.

Entsprechend Fig. 1 besitzt eine Abgasbehandlungseinrichtung 1 ein Gehäuse 2, in dem ein Substratkörper 3 angeordnet ist. Die Abgasbehandlungseinrichtung 1 dient zum Einbau in einen Abgasstrang einer Brennkraftmaschine, insbesondere bei Kraftfahrzeugen. Bei der Abgasbehandlungseinrichtung 1 handelt es sich vorzugsweise um ein Partikelfilter, insbesondere um ein Rußfilter. Ebenso kann die Abgasbehanldungseinrichtung 1 als Katalysator ausgestaltet sein.

Das Gehäuse 2 ist hier mehrteilig aufgebaut und besitzt zumindest einen Mantel 4, der den Substratkörper 3 bezüglich einer Axialrichtung 5 radial umhüllt, sowie einen Boden 6, der axial an den Mantel 4 anschließt und das Gehäuse 2 axial abschließt. Der Boden 6 ist hier in Form eines Trichters ausgebildet.

Der Substratkörper 3 ist im Gehäuse 2 zum einen mittels einer Radiallagerung 7 und zum andern über wenigstens eine Axiallagerung 8 gehaltert. Bei einem Substratkörper 3, der in der Axialrichtung 5 von Abgasen durchströmbar ist, ist es zweckmäßig, eine derartige Axiallagerung 8 zumindest an einer Abströmseite des Substratkörpers 3 anzuordnen, um die im Betrieb der Abgasbehandlungseinrichtung 1 auftretenden Axialkräfte zwischen Substratkörper 3 und Gehäuse 2 abzustützen. Dementsprechend zeigt Fig. 1 auch ein abströmseitiges Ende der Abgasbehandlungseinrichtung 1. Grundsätzlich kann jedoch auch das nicht gezeigte, anströmseitige Ende der Abgasbehandlungseinrichtung 1 einen entsprechenden Aufbau aufweisen.

Die Radiallagerung 7 umfasst üblicherweise eine Lagermatte 9 aus einem geeigneten Lagermaterial. Die Lagermatte 9 umhüllt den Substratkörper 3 entlang seines Außenumfangs und stützt somit den Substratkörper 3 in radialer Richtung am Gehäuse 2 ab.

Der Substratkörper 3 ist üblicherweise als Monolith ausgebildet und insbesondere aus Keramik hergestellt.

Die Axiallagerung 8 umfasst einen gehäusefesten Stützring 10, der hier als separates Bauteil ausgebildet ist und auf geeignete Weise am Gehäuse 2, hier am Boden 6 (Trichter bzw. Auslauftrichter) befestigt ist. Der Stützring 10 bildet eine Rinne, die zu einer axialen Stirnseite 11 des Substratkörpers 3 hin offen ist. Zu diesem Zweck besitzt der Stützring 10 ein zur Stirnseite 11, hier zur abströmseitigen Stirnseite 11, hin offenes U-Profil 12. Das U-Profil 12 besitzt einen radial außenliegenden Außenschenkel 13 sowie einen radial innenliegenden Innenschenkel 14. Bei der hier gezeigten Ausführungsform erfolgt die Dimensionierung des Stützrings 10 so, dass der Außenschenkel 13 an einer radial innenliegenden Innenseite einen Innenquerschnitt 15 aufweist, der etwa gleich groß ist wie ein Außenquerschnitt 16 des Substratkörpers 3 an der Stirnseite 11. Der Innenquerschnitt 15 des Außenschenkels 13 kann auch geringfügig größer sein als der Außenquerschnitt 16 des Substratkörpers 3.

Der Substratkörper 3 besitzt zweckmäßig einen zylindrischen, insbesondere einen kreiszylindrischen oder ovalen oder elliptischen Querschnitt. Dementsprechend ist auch der Stützring 10 komplementär geformt.

Sofern der Substratkörper 3, der Stützring 10 und Lagerring 17 kreisförmige Querschnitte besitzen, gelten die für die Querschnitte weiter oben und weiter unten angeführten Relationen in entsprechender Weise auch für die zugehörigen Durchmesser.

Die Axiallagerung 8 umfasst außerdem einen Lagerring 17 aus einem geeigneten Lagermaterial. Der Lagerring 17 ist in das U-Profil 12 des Stützrings 10 eingesetzt. Im hier gezeigten Einbauzustand stützt sich der Lagerring 17 mit einem dem Substratkörper 3 zugewandten Axialende an der Stirnseite 11 des Substratkörpers 3 ab. An seinem vom Substratkörper 3 abgewandten Axialende stützt sich der Lagerring 17 am Stützring 10 ab. Der Lagerring 17 ist vorzugsweise als Gestrick, insbesondere als Drahtgestrick, ausgebildet und bildet zweckmäßig ein nachgiebiges Gestrickkissen, insbesondere ein Drahtgestrickkissen. Durch diese Bauweise kann der Lagerring 17 als Feder ausgestaltet sein, die eine vorbestimmte Federkennlinie besitzt. Hierdurch erfolgt die axiale Abstützung des Substratkörpers 3 gegen die Federkraft des Lagerrings 17. Zweckmäßig ist der Lagerring 17 mit axialer Vorspannung montiert, die außerdem so ausgelegt sein kann, dass auch in üblichen Betriebszuständen der Abgasbehandlungseinrichtung 1 noch hinreichende axiale Vorspannung oder Restspannung vorhanden ist, um dem Substratkörper 3 axial im Gehäuse 2 zu positionieren.

Fig. 1 gibt dabei den Einbauzustand wieder, in dem der Lagerring 17 bereits vorgespannt, also in Axialrichtung komprimiert ist.

Wie aus Fig. 1 entnehmbar ist, besitzt der Stützring 10 im Einbauzustand einen axialen Abstand gegenüber der ihm zugewandten Stirnseite 11 des Substratkörpers 3. Dieser Abstand wird vom Lagerring 17, der in das U-Profil 12 des Stützrings 10 eingreift, überbrückt. Dieser Abstand ermöglicht axiale Relativbewegungen zwischen dem Stützring 10 und dem Substratkörper 3. Derartige Relativbewegungen treten vor allem aufgrund von Wärmedehnungseffekten auf. Die Abmessungen des Lagerrings 17 und des U-Profils 12 sind so aufeinander abgestimmt, dass einerseits der Außenschenkel 13 den Lagerring 17 radial außen abstützt und das andererseits der Innenschenkel 14 den Lagerring 17 radial innen abstützt. Durch diese beidseitige radiale Abstützung des Lagerrings 17 ist dieser im Stützring 10 quasi gekammert und hinsichtlich seiner Form stabilisiert. Ein Ausbeulen das Lagerrings 17 bei größeren Axialkräften kann dadurch vermieden werden. Die axiale Abstützwirkung der Axiallagerung 8 wird somit verbessert.

Der Lagerring 17 ist so dimensioniert und positioniert, dass er sich am Substratkörper 3 nur an einem in radialer Richtung relativ schmalen, radial außenliegenden Randabschnitt 18 der Stirnseite 11 axial abstützt. Hierdurch wird der freie durchströmbare Querschnitt des Substratkörpers 3 durch die Axiallagerung 8 nicht oder nur geringfügig reduziert. Im Hinblick auf die bevorzugten Dimensionierungen des Stützrings 10 ergeben sich auch entsprechende Dimensionierungen für den Lagerring 17. Beispielsweise ist ein Außenquerschnitt 19 des Lagerrings 17 etwa gleich groß wie der Außenquerschnitt 16 des Substratkörpers 3 an der Stirnseite 11. Ein Innenquerschnitt 20 des Lagerrings 17 ist dementsprechend kleiner als der Außenquerschnitt 16 des Substratkörpers 3. Es ist klar, dass der Stützring 17 mit seinem Außenwinkel 13 in radialer Richtung auch (geringfügig) über den Substratkörper 3 vorstehen kann.

Durch diese Bauweise ist gleichzeitig gewährleistet, dass auch der Boden 6 radial gegenüber dem Substratkörper 3 beabstandet ist, um Axialbewegungen des Substratkörpers 3 nicht zu blockieren.

Der Lagerring 17 besitzt hier ein Profil, das sich in axialer Richtung weiter erstreckt als in radialer Richtung. Zweckmäßig ist die axiale Erstreckung des Lagerring-Profils etwa doppelt so groß wie seine radiale Erstreckung.

Von besonderer Bedeutung ist bei der vorliegenden Abgasbehandlungseinrichtung 1 außerdem, dass die Lagermatten 9 der Radiallagerung 7 und der Lagerring 17 der Axiallagerung 8 als separate Bauteile ausgebildet sind, die sich insbesondere nicht berühren, sondern vielmehr axial voneinander beabstandet sind. Zum einen können dadurch Wechselwirkungen zwischen der Radiallagerung 7 und der Axiallagerung 8 vermieden werden, zum anderen ermöglicht die separate Bauweise die Auswahl geeigneter Lagermaterialien für die Lagermatte 9 und für den Lagerring 17 in Abhängigkeit der jeweiligen Anforderungen.

Zweckmäßig ist der Stützring 10 als separates Bauteil hergestellt. Dies ermöglicht bei der Montage der Abgasbehandlungseinrichtung 1 eine individuelle Positionierung und Justierung des Stützrings 10, um Herstellungstoleranzen auszugleichen. Auf diese Weise kann eine gleichmäßige Pressung des Lagerrings 17 erreicht werden. Der Stützring 10 besitzt in Umfangsrichtung eine Unterbrechung 21, die es ermöglicht, beim Einbauen des Stützrings 10 Herstellungstoleranzen auszugleichen. Der gespaltene oder geschlitzte Stützring 10 kann somit besser an die Kontur des Gehäuses 2, hier des Bodens 6 angeglichen werden.

Bei der hier gezeigten, bevorzugten Ausführungsform ist der Innenschenkel 14 des U-Profils 12 in axialer Richtung kürzer ausgebildet als der Außenschenkel 13. Durch diese Bauweise kann derjenige Teil der Abgasströmung, der am Außenrand 18 in den Lagerring 17 eintritt, besser in die Hauptströmung zurückgeführt werden.

Die Montage der Abgasbehandlungseinrichtung 1 erfolgt zweckmäßig wie folgt:

Der Substratkörper 3 wird zusammen mit der Radiallagerung 7 in herkömmlicher Weise in den Mantel 4 eingefügt. Der Stützring 10 wird in den Boden 6 bzw. in den Trichter 6 eingesetzt, wobei Herstellungstoleranzen ausgeglichen werden können. Durch eine entsprechende Justierung des Stützrings 10 kann diese für eine optimale axiale Anlage des Lagerrings 17 ausgerichtet werden. Nach dem Befestigen des Stützrings 10 am Boden 6, insbesondere durch verschweißen, wird der Lagerring 17 in den Stützring 10 eingesetzt. Anschließend wird der Boden 6 in den Mantel 4 eingesteckt. Durch die Einstecktiefe des Bodens 6 kann die Vorspannung des Lagerrings 17 eingestellt werden. Gleichzeitig können Winkligkeiten des Substratkörpers 3 durch entsprechendes Ausrichten des Bodens 6 ausgeglichen werden. Anschließend wird der Boden 6 am Mandel 4 befestigt, insbesondere angeschweißt.

## Patentansprüche

1. Abgasbehandlungseinrichtung, insbesondere für eine Brennkraftmaschine, vorzugsweise in einem Kraftfahrzeug,
- mit einem Gehäuse (2) und mit einem im Gehäuse (2) angeordneten Substratkörper (3), der in einer Axialrichtung (5) von Abgasen durchströmbar ist,
- wobei der Substratkörper (3) wenigstens an einer axialen Stirnseite (11) über eine Axiallagerung (8) am Gehäuse (2) axial abgestützt ist,
- wobei die Axiallagerung (8) einem gehäusefesten Stützring (10) aufweist, der ein zur Stirnseite (11) des Substratkörpers (3) hin axial offenes U-Profil (12) aufweist,
- wobei die Axiallagerung (8) einen Lagerring (17) aus Lagermaterial aufweist, der an seinem vom Substratkörper (3) abgewandten Axialende in das U-Profil (12) des Stützrings (10) eingreift und sich daran axial abstützt und der sich mit seinem dem Substratkörper (3) zugewandten Axialende an der Stirnseite (11) des Substratkörpers (3) abstützt,
- wobei der Stützring (10) als separates Bauteil, ausgebildet ist, das am Gehäuse (2) befestigt ist,
**dadurch gekennzeichnet,**
- **dass** der Stützring (10) in Umfangsrichtung eine Unterbrechung (21) aufweist,
- **dass** das Gehäuse (2) mehrteilig aufgebaut ist und zumindest einen Mantel (4) und einen Boden (6) aufweist,
- **dass** der Stützring (10) am Boden (6) befestigt ist,
- **dass** der Boden (6) am Mantel (4) befestigt ist.

2. Abgasbehandlungseinrichtung nach Anspruch 1,
**dadurch gekennzeichnet,**
**dass** der Lagerring (17) als Gestrick oder Drahtgestrick oder als Gestrickkissen oder Drahtgestrickkissen ausgebildet ist.

3. Abgasbehandlungseinrichtung nach Anspruch 1 oder 2,
**dadurch gekennzeichnet,**
**dass** der Lagerring (17) den Substratkörper (3) an einem radial außenliegenden Randabschnitt (18) der axialen Stirnseite (11) axial abstützt.

4. Abgasbehandlungseinrichtung nach einem der Ansprüche 1 bis 3,
**dadurch gekennzeichnet,**
- **dass** ein Außenquerschnitt (19) des Lagerrings (17) gleich groß ist wie oder größer ist als ein Außenquerschnitt (16) des Substratkörpers (3) an dessen Stirnseite (11),
- **dass** ein Innenquerschnitt (20) des Lagerrings (17) kleiner ist als der Außenquerschnitt (16) des Substratkörpers (3) an dessen Stirnseite (11).

5. Abgasbehandlungseinrichtung nach einem der Ansprüche 1 bis 4,
**dadurch gekennzeichnet,**
**dass** ein radial außenliegender Außenschenkel (13) des U-Profils (12) des Stützrings (10) an seiner radial innenliegenden Innenseite einen Innenquerschnitt (15) aufweist, der gleich groß ist wie oder größer ist als ein Außenquerschnitt (16) des Substratkörpers (3) an dessen Stirnseite (11)

6. Abgasbehandlungseinrichtung nach einem der Ansprüche 1 bis 5,
**dadurch gekennzeichnet,**
**dass** der Stützring (17) von der ihm zugewandten Stirnseite (11) des Substratkörpers (3) axial beabstandet ist.

7. Abgasbehandlungseinrichtung nach einem der Ansprüche 1 bis 6,
**dadurch gekennzeichnet,**
**dass** ein radial innenliegender Innenschenkel (14) des U-Profils (12) des Stützrings (10) axial kürzer ist als ein radial außenliegender Außenschenkel (13) des U-Profils (12) des Stützrings (10).

8. Abgasbehandlungseinrichtung nach einem der Ansprüche 1 bis 7,
**dadurch gekennzeichnet,**
- **dass** der Stützring (10) an einem axialen Boden (6) des Gehäuses (2) befestigt ist,
- **dass** der Boden (6) an einem Mantel (4) des Gehäuses (2) befestigt ist.

9. Abgasbehandlungseinrichtung nach einem der Ansprüche 1 bis 8,
**dadurch gekennzeichnet,**
- **dass** der Substratkörper (3) entlang seines Umfangs über eine Radiallagerung (7) am Gehäuse (2) radial abgestützt ist,
- **dass** die Radiallagerung (7) eine Lagermatte (9) aus Lagermaterial aufweist, die den Substratkörper (3) radial außen umhüllt,
- **dass** Lagerring (17) und Lagermatte (9) separate Bauteile sind.

10. Abgasbehandlungseinrichtung nach Anspruch 9,
**dadurch gekennzeichnet,**
**dass** Lagerring (17) und Lagermatte (9) axial voneinander beabstandet sind.

11. Abgasbehandlungseinrichtung nach einem der Ansprüche 1 bis 10,
**dadurch gekennzeichnet,**
**dass** der Substratkörper (3) zumindest an seiner abströmseitigen axialen Stirnseite (11) über die Axiallagerung (8) am Gehäuse (2) axial abgestützt ist.

12. Abgasbehandlungseinrichtung nach einem der Ansprüche 1 bis 11,
**dadurch gekennzeichnet,**
**dass** der Lagerring (17) ein Profil aufweist, dessen Erstreckung in axialer Richtung größer als oder etwa doppelt so groß ist wie seine Erstreckung in radialer Richtung.

13. Abgasbehandlungseinrichtung nach einem der Ansprüche 1 bis 12,
**dadurch gekennzeichnet,**
**dass** die Abmessungen von Stützring (10) und Lagerring (17) so aufeinander abgestimmt sind, dass zwei Schenkel (13, 14) des U-Profils (12) des Stützrings (10) den Lagerring (17) radial außen und radial innen abstützen.

14. Abgasbehandlungseinrichtung nach einem der Ansprüche 1 bis 13,
**dadurch gekennzeichnet,**
**dass** der Lagerring (17) als Feder mit vorbestimmter Kennlinie ausgestaltet ist.

15. Abgasbehandlungseinrichtung nach einem der Ansprüche 1 bis 14,
**dadurch gekennzeichnet,**
**dass** der Lagerring (17) mit einer axialen Vorspannung eingebaut ist.

16. Abgasbehandlungseinrichtung nach Anspruch 15,
**dadurch gekennzeichnet,**
**dass** die Vorspannung so gewählt ist, dass auch im Betrieb der Abgasbehandlungseinrichtung (1) eine axiale Restspannung vorliegt.

17. Abgasbehandlungseinrichtung nach einem der Ansprüche 1 bis 16,
**dadurch gekennzeichnet,**
**dass** die Abgasbehandlungseinrichtung (1) ein Partikelfilter oder Rußfilter oder ein Katalysator ist.

## Claims

1. An exhaust gas treatment device, particularly for a combustion engine, preferentially in a motor vehicle,
- with a housing (2) and with a substrate body (3) arranged in the housing (2), through which in an axial direction (5) exhaust gases can flow,
- wherein the substrate body (3) is axially supported on the housing (2) at least on one axial face end (11) via an axial mounting (8),
- wherein the axial mounting (8) comprises a support ring (10) fixed on the housing, which comprises an axially open U-profile (12) towards the face end (11) of the substrate body (3),
- wherein the axial mounting (8) comprises a mounting ring (17) of mounting material which on its axial end facing away from the substrate body (3) engages into the U-profile (12) of the support ring and axially supports itself thereon and which with its axial end facing the substrate body (3) supports itself on the face end (11) of the substrate body (3),
- wherein the support ring (10) is designed as separate component fastened to the housing (2),
**characterized**
- **in that** the support ring (10) in circumferential direction comprises an interruption (21),
- **in that** the housing (2) is constructed of multiple parts and comprises at least one jacket (4) and one bottom (6),
- **in that** the support ring (10) is fastened to the bottom (6),
- **in that** the bottom (6) is fastened to the jacket (4).

2. The exhaust gas treatment device according to Claim 1, **characterized in that** the mounting ring (17) is designed as knitted fabric or wire knitted fabric or as knitted fabric cushion or wire knitted fabric cushion.

3. The exhaust gas treatment device according to Claim 1 or 2, **characterized in that** the mounting ring (17) axially supports the substrate body (3) on a marginal section (18) of the axial face end (11) located radially outside.

4. The exhaust gas treatment device according to any one of the Claims 1 to 3, **characterized**
- **in that** an outer cross section of the mounting ring (17) is as large as or larger than an outer cross section (16) of the substrate body (3) at its face end (11),
- **in that** an inner cross section (20) of the mounting ring (17) is smaller than the outer cross section (16) of the substrate body (3) at its face end (11).

5. The exhaust gas treatment device according to any one of the Claims 1 to 4, **characterized in that** an outer leg (13) of the U-profile (12) of the support ring (10) on its inner side located radially inside has an inner cross section (15) which is as large or larger than an outer cross section (16) of the substrate body (3) at its face end (11).

6. The exhaust gas treatment device according to any one of the Claims 1 to 5, **characterized in that** the support ring (17) is axially spaced from the face end (11) of the substrate body (3) facing it.

7. The exhaust gas treatment device according to any one of the Claims 1 to 6, **characterized in that** an inner leg (14) of the U-profile (12) of the support ring (10) located radially inside is axially shorter than an outer leg (of the U-profile (12) of the support ring (10) located radially outside.

8. The exhaust gas treatment device according to any one of the Claims 1 to 7, **characterized**
- **in that** the support ring (10) is fastened to an axial bottom (6) of the housing (2),
- **in that** the bottom (6) is fastened to a jacket (4) of the housing (2).

9. The exhaust gas treatment device according to any one of the Claims 1 to 8, **characterized**
- **in that** the substrate body (3) along its circumference is radially supported on the housing (2) via a radial mounting (7),
- **in that** the radial mounting (7) comprises a mounting mat (7) of mounting material enveloping the substrate body (3) radially outside,
- **in that** mounting ring (17) and mounting mat (9) are separate components.

10. The exhaust gas treatment device according to Claim 9, **characterized in that** mounting ring (17) and mounting mat (9) are axially spaced from each other.

11. The exhaust gas treatment device according to any one of the Claims 1 to 10, **characterized in that** the substrate body (3) at least on its axial face end (11) on the outflow side is axially supported on the housing (2) via the axial mounting (8).

12. The exhaust gas treatment device according to any one of the Claims 1 to 11, **characterized in that** the mounting ring (17) has a profile whose extension in axial direction is greater or approximately twice in size than its extension in radial direction.

13. The exhaust gas treatment device according to any one of the Claims 1 to 12, **characterized in that** the dimensions of support ring (10) and mounting ring (17) are so matched to each another that two legs (13, 14) of the U-profile (12) of the support ring (10) support the mounting ring (17) radially outside and radially inside.

14. The exhaust gas treatment device according to any one of the Claims 1 to 13, **characterized in that** the mounting ring (17) is configured as spring with predetermined characteristic curve.

15. The exhaust gas treatment device according to any one of the Claims 1 to 14 **characterized in that** the mounting ring (17) is installed with an axial preload.

16. The exhaust gas treatment device according to Claim 15, **characterized in that** the preload is so selected that even in operation of the exhaust gas treatment device (1) an axial residual load is present.

17. The exhaust gas treatment device according to any one of the Claims 1 to 16, **characterized in that** the exhaust gas treatment device (1) is a particle filter or a soot filter or a catalytic converter.

## Revendications

1. Dispositif de traitement de gaz brûlés, en particulier pour un moteur à combustion interne, de préférence sur un véhicule automobile,
- comprenant un boîtier (2) et un corps de substrat (3) disposé dans le boîtier (2), qui peut être traversé dans une direction axiale (5) par des gaz brûlés,
- le corps de substrat (3) étant soutenu axialement au moins sur un côté avant (11) axial au moyen d'un logement axial (8) sur le boîtier (2),
- le logement axial (8) présentant une bague de soutien (10) solidaire du boîtier, qui présente un profilé en U (12) ouvert axialement en direction du côté avant (11) du corps de substrat (3),
- le logement axial (8) présentant une bague de palier (17) à base de matériau de palier, qui s'engage sur son extrémité axiale opposée au corps de substrat (3) dans le profilé en U (12) de la bague de soutien (10) et s'appuie axialement dessus et qui s'appuie par son extrémité axiale tournée vers le corps de substrat (3) sur le côté avant (11) du corps de substrat (3),
- la bague de soutien (10) étant conçue comme composant séparé, qui est fixé sur le boîtier (2),
**caractérisé en ce que**
- la bague de soutien (10) présente une interruption (21) dans le sens périphérique,
- **en ce que** le boîtier (2) est conçu en plusieurs parties et présente au moins une enveloppe (4) et un fond (6),
- **en ce que** la bague de soutien (10) est fixée sur le fond (6),
- **en ce que** le fond (6) est fixé sur l'enveloppe (4).

2. Dispositif de traitement de gaz brûlés selon la revendication 1,
**caractérisé en ce que**
la bague de palier (17) est conçue comme tricotage ou tricotage de fil ou comme coussin tricoté ou coussin tricoté en fil.

3. Dispositif de traitement de gaz brûlés selon la revendication 1 ou 2,
**caractérisé en ce que**
la bague de palier (17) soutient axialement le corps de substrat (3) sur une partie de bordure (18) extérieure radialement du côté avant (11) axial.

4. Dispositif de traitement de gaz brûlés selon l'une quelconque des revendications 1 à 3,
**caractérisé en ce que**
une section extérieure (19) de la bague de palier (17) est aussi grande ou plus grande qu'une section extérieure (16) du corps de substrat (3) sur son côté avant (11),
- **en ce qu'**une section intérieure (20) de la bague de palier (17) est inférieure à la section extérieure (16) du corps de substrat (3) sur son côté avant (11).

5. Dispositif de traitement de gaz brûlés selon l'une quelconque des revendications 1 à 4,
**caractérisé en ce que**
une branche extérieure (13) radialement extérieure du profilé en U (12) de la bague de soutien (10) présente sur son côté avant radialement intérieur une section intérieure (15) qui est aussi grande ou supérieure à une section extérieure (16) du corps de substrat (3) sur son côté avant (11).

6. Dispositif de traitement de gaz brûlés selon l'une quelconque des revendications 1 à 5,
**caractérisé en ce que**
la bague de soutien (17) est espacée axialement du côté avant (11), tourné vers la bague, du corps de substrat (3).

7. Dispositif de traitement de gaz brûlés selon l'une quelconque des revendications 1 à 6,
**caractérisé en ce que**
une branche intérieure (14) radialement intérieure du profilé en U (12) de la bague de soutien (10) est axialement plus courte qu'une branche extérieure (13) radialement extérieure du profilé en U (12) de la bague de soutien (10).

8. Dispositif de traitement de gaz brûlés selon l'une quelconque des revendications 1 à 7,
**caractérisé en ce que**
- la bague de soutien (10) est fixée sur un fond (6) axial du boîtier (2),
- **en ce que** le fond (6) est fixé sur une enveloppe (4) du boîtier (2).

9. Dispositif de traitement de gaz brûlés selon l'une quelconque des revendications 1 à 8,
**caractérisé en ce que**
- le corps de substrat (3) est soutenu radialement le long de son pourtour au moyen d'un logement radial (7) sur le boîtier (2),
- **en ce que** le logement radial (7) présente une natte de palier (9) à base de matériau de palier, qui enveloppe le corps de substrat (3) radialement à l'extérieur,
- **en ce que** la bague de palier (17) et la natte de palier (9) sont des composants séparés.

10. Dispositif de traitement de gaz brûlés selon la revendication 9,
**caractérisé en ce que**
la bague de palier (17) et la natte de palier (9) sont espacées axialement l'une à l'autre.

11. Dispositif de traitement de gaz brûlés selon l'une quelconque des revendications 1 à 10,
**caractérisé en ce que**
le corps de substrat (3) est soutenu axialement au moins sur son côté avant (11) axial côté écoulement par le logement axial (8) sur le boîtier (2).

12. Dispositif de traitement de gaz brûlés selon l'une quelconque des revendications 1 à 11,
**caractérisé en ce que**
la bague de palier (17) présente un profil, dont l'extension dans la direction axiale est supérieure ou à peu près deux fois plus grande que son extension dans le sens radial.

13. Dispositif de traitement de gaz brûlés selon l'une quelconque des revendications 1 à 12,
**caractérisé en ce que**
les dimensions de la bague de soutien (10) et de la bague de palier (17) sont adaptées les unes aux autres de telle sorte que deux branches (13, 14) du profilé en U (12) de la bague de soutien (10) soutiennent la bague de palier (17) radialement à l'extérieur et radialement à l'intérieur.

14. Dispositif de traitement de gaz brûlés selon l'une quelconque des revendications 1 à 13,
**caractérisé en ce que**
la bague de palier (17) est conçue comme ressort avec une courbe caractéristique prédéfinie.

15. Dispositif de traitement de gaz brûlés selon l'une quelconque des revendications 1 à 14,
**caractérisé en ce que**
la bague de palier (17) est montée avec une précontrainte axiale.

16. Dispositif de traitement de gaz brûlés selon la revendication 15,
**caractérisé en ce que**
la précontrainte est choisie de telle sorte qu'une tension résiduelle axiale est présente également pendant le fonctionnement du dispositif de traitement de gaz brûlés (1).

17. Dispositif de traitement de gaz brûlés selon l'une quelconque des revendications 1 à 16,
**caractérisé en ce que**
le dispositif de traitement de gaz brûlés (1) est un filtre à particules ou un filtre à poussières ou un catalyseur.
